# EUROPEAN PATENT SPECIFICATION

(11) **EP 2 615 275 B1**
(45) Date of publication and mention of the grant of the patent: **11.03.2015**
(21) Application number: 12198157.5
(22) Date of filing: 19.12.2012
(51) Int. Cl.: F02C 7/18, F01D 5/08

(54) **Coolant Supply System**
Kühlmittelversorgungssystem
Système d'alimentation de réfrigération

(30) Priority: 06.01.2012 GB 201200139
(43) Date of publication of application: 17.07.2013
(73) Proprietor: Rolls-Royce plc, London SW1E 6AT (GB)
(72) Inventor: Bacic, Marko, Oxford, oxfordshire OX2 7SP (GB)
(74) Representative: Hartley, Andrew Colin

(56) References cited:
- EP-A2- 1 923 539
- DE-C1- 10 009 655
- GB-A- 2 474 567
- US-A1- 2003 000 222
- US-A1- 2005 109 016
- US-A1- 2010 154 434

## Description

This invention relates to the supply of fluid for cooling components at elevated temperatures in use and, more particularly, to the supply of such fluid in engines, such as gas turbine engines.

It is known that the temperature of the combustion products within a gas turbine engine can achieve 1600°C or higher and that such temperatures exceed the melting point of materials from which turbine blades, amongst other components, may be manufactured. Accordingly it is conventional to provide internal cooling channels within such components and to provide a pressurised supply of cooling air to those channels in use in order to maintain the structural integrity of the components.

To this end, cooling air can be ducted from one or more compressors in the gas turbine engine, typically a high pressure compressor, to the relevant components. Such cooling air thus bypasses the combustor. However such cooling air is itself elevated in temperature by the compressor, amongst other portions of the engine through which the air must travel en route to the components to be cooled. Accordingly the cooling air may itself be at or above a temperature of 700°C.

The adequate cooling of hot components in a gas turbine engine represents a complex problem since any cooling air taken from the compressor causes a loss of efficiency since work is being done by the compressor on air which bypasses the combustor, resulting in reduced thrust being produced by the engine. Conversely, increased cooling of the hot components can improve the life of those components and so a balance must be struck between engine efficiency and operational life. Whilst this represents a simplified overview of the mitigating factors, it will be appreciated that the precise cooling solution selected will be dependent on a number of more detailed factors which are specific to a given engine configuration.

One approach that has been considered in the past is the provision of a heat exchanger in the flow path of the cooling air flow between the compressor and the hot components to be cooled. In this manner, air from the bypass duct of a gas turbine engine, can be used to cool the compressed air supplied to the turbine. An example of such an arrangement is given in US4254618 which proposes to bleed cooling air from the compressor discharge of a turbofan engine, and to rout the cooling air to a heat exchanger located in a diffuser section of the fan duct. The cooled cooling air is then routed through compressor rear frame struts to an expander nozzle and thence to the turbine.

GB2474567 describes a gas turbine engine cooling system which includes a heat exchanger in fluid communication with a source of cooling air, a first cooling circuit including a first heat exchanger circuit in the heat exchanger and a first bypass circuit with a first bypass valve for selectively bypassing at least a portion of first airflow around the first heat exchanger circuit. A second cooling circuit is also described which has a second heat exchanger circuit in the heat exchanger and a shutoff control valve operably disposed in the second cooling circuit upstream of the second heat exchanger circuit and the heat exchanger. A circuit inlet of the first cooling circuit may be used to bleed a portion of compressor discharge bleed air for the first airflow to cool turbine blades mounted on a rotor disk using an annular flow inducer downstream of the first bypass valve and the heat exchanger.

US2010154434 discloses a gas turbine comprising: a compressor section; a combustor section; a turbine section; a gas turbine casing which houses the compressor section, the combustor section, and the turbine section therein; a stator cooling air system for leading compressed air extracted from midstream of the compressor section into stator vanes which constitute the turbine section; and an air bleeding system for extracting compressed air from the exit of the compressor section to the outside of the gas turbine casing, wherein midstream of the stator cooling air system and midstream of the air bleeding system are connected via a connecting path, and at midstream of this connecting path, there is a flow rate control part connected.

There is constant need to improve operational efficiency whilst accommodating adequate cooling of hot components.

According to a first aspect of the present invention, there is provided a cooling system for a gas turbine engine having a compressor, a combustor and a turbine section arranged to receive combustion products from the combustor, the cooling system comprising: ducting defining a flow path from the compressor to a component to be cooled within the turbine section, wherein said ducting bypasses the combustor and includes at least one heat exchanger for cooling the air received from the compressor in use and wherein the component includes openings through which the cooling air exits the component to create a film of cooling air; one or more valves in said flow path; and a controller arranged to control actuation of the valve at a predetermined frequency so as to modify the flow in the flow path to the component and the film of cooling air in an oscillating manner wherein the component has a fluid washed surface and the predetermined frequency of actuation of the valve is set by the controller according to one or more gas turbine engine operating parameters in order to improve the aerodynamic efficiency of the component in use.

The modification of the flow may comprise a modification of the flow profile or regime, for example rather than a modification of the overall mass flow rate to the component. The flow modification may comprise oscillating or pulsing the flow. The flow modification may comprise varying the flow rate in a predetermined manner. The valve may be actuated in a substantially sinusoidal manner.

The component may comprise a gas washed surface and one or more cooling passages therein which open at the gas washed surface. The present invention may allow the supply of cooling air to be controlled in a manner which advantageously controls the boundary layer flow over the gas washed surface. The oscillating valve control may be achieved substantially without affecting the global cooling flow to the component.

The component may comprise a turbine blade and/or disk. Additionally or alternatively the component may comprise a stator vane.

Preferably the controller controls actuation of the valve to control only a portion of the flow rate to the component. The cooling system may be configured to supply a constant baseline, nominal or minimum flow rate to the component from the compressor. The controller may control actuation of the valve to either supply or inhibit flow which is supplementary to that flow rate.

The controller may control actuation of the valve so as to control a variation in the flow to the component of between 5% and 50%. Preferably the control of the valve allows the flow to the component to be varied by between 10% and 30 or 40%.

The controller may set a nominal or base flow rate, for example in response to the changes in one or more of engine parameters. The controller may superimpose small amplitude oscillations at the predetermined frequency to the nominal flow rate. The oscillations at the predetermined frequency may be subject to changes, for example in amplitude and/or frequency, based one or more engine parameters, such as a temperature, pressure, speed or other operating parameter.

The controller may control oscillation of the valve between first and second conditions. The first condition may comprise a first open condition. The first condition may permit a greater flow rate through the valve than the second condition. The second condition may provide a greater flow restriction than the first condition. The second condition may comprise a second open condition.

Alternatively, the second condition may comprise a closed condition. The ducting may provide a portion of the flow path that bypasses the valve, for example, so that a portion of the cooling flow reaches the component regardless of the condition of the valve.

The predetermined frequency of valve actuation may comprise iterative valve actuation at a predetermined time interval. The valve actuation may be cyclic and may comprise actuation between first and second valve conditions and vice versa. The controller may vary the predetermined frequency during operation. The frequency of valve actuation may be set by the controller, for example, based on readings from one or more sensors. The sensor may be a temperature sensor, which may be located in the turbine section.

The controller may set a first predetermined frequency value and may monitor one or more system variables to assess the suitability of the first frequency value. The controller may be an open or closed loop controller and may operate according to one or more control algorithms. The controller may comprise machine readable instructions.

The system comprises a heat exchanger arranged in the flow path to extract heat from the flow between the compressor and the component. The controller may control actuation of the valve so as to modify the flow between the heat exchanger and the component.

The valve may be upstream of the heat exchanger within the flow path between the compressor and the component. Accordingly the valve may control the flow of gas to the heat exchanger.

The valve may be located in the flow path between the heat exchanger and the component. Such an arrangement may allow a further valve to be located in the flow path upstream of the heat exchanger, wherein the further valve is controlled independently of the first valve. Thus flow both to the heat exchanger and to the component from the heat exchanger can be independently optimised.

The ducting may define a plurality of flow paths and the valve may be arranged to selectively combine the flows from said plurality of flow paths for passage to the component.

The flow path may be a first flow path which is ducted from a first compressor. The first compressor may be a higher pressure compressor. The system may comprise a further flow path to the heat exchanger. The further flow path may communicate gas from a further compressor to the heat exchanger. The further compressor may comprise a lower pressure compressor. The heat exchanger may have a first inlet for the first flow path and a further inlet for the further flow path. The first and further flow paths may be isolated from each other. Heat energy may be transferred from the first flow path to the further flow path in use.

The further flow path may bypass the first compressor.

The application of a predetermined frequency of operation to the valve may advantageously allow the flow rate to the component to be controlled and/or reduced.

According to a second aspect of the invention, there is provided a method of cooling in a gas turbine engine having a compressor, a combustor and a turbine section arranged to receive combustion products from the combustor, the method comprising: ducting compressed gas from the compressor to a component to be cooled within the turbine section, wherein the component includes openings through which the cooling air passes to create a film of cooling air and wherein said ducting bypasses the combustor and includes at least one heat exchanger for cooling the air received from the compressor and includes at least one heat exchanger for cooling the air received from the compressor; delivering at least a portion of the cooled compressed gas to the component through a valve and controlling actuation of the valve at a predetermined frequency so as to modify the supply of cooling flow to said component to create a film of cooling air in an oscillating manner.

The ducting may comprise passing the compressed gas through a heat exchanger to extract heat therefrom, typically upstream of the component.

A controller may be provided for a gas turbine engine cooling system, the controller comprising machine readable instructions for actuation of a valve in a flow path between a compressor and a turbine of the gas turbine engine at a predetermined actuation frequency.

Any of the optional features defined above in relation to the first aspect may be applied to the second or third aspect.

Practicable embodiments of the present invention are described below in further detail by way of example with reference to the accompanying drawings, of which:
Figure 1 shows a half longitudinal section through a gas turbine engine according to the present invention;
Figure 2 shows a schematic three-dimensional view of a component to be cooled according to the present invention;
Figure 3 shows a schematic view of a cooling system according to one example of the present invention
Figure 4 shows a partial section through a cooling system according to one implementation of the system of Figure 3;
Figure 5 shows a partial section through a cooling system according to a further example of the invention;
Figure 6 shows one example of a valve for use in the arrangement of Figure 5; and,
Figure 7 shows a schematic of a controller according to one embodiment of the invention.

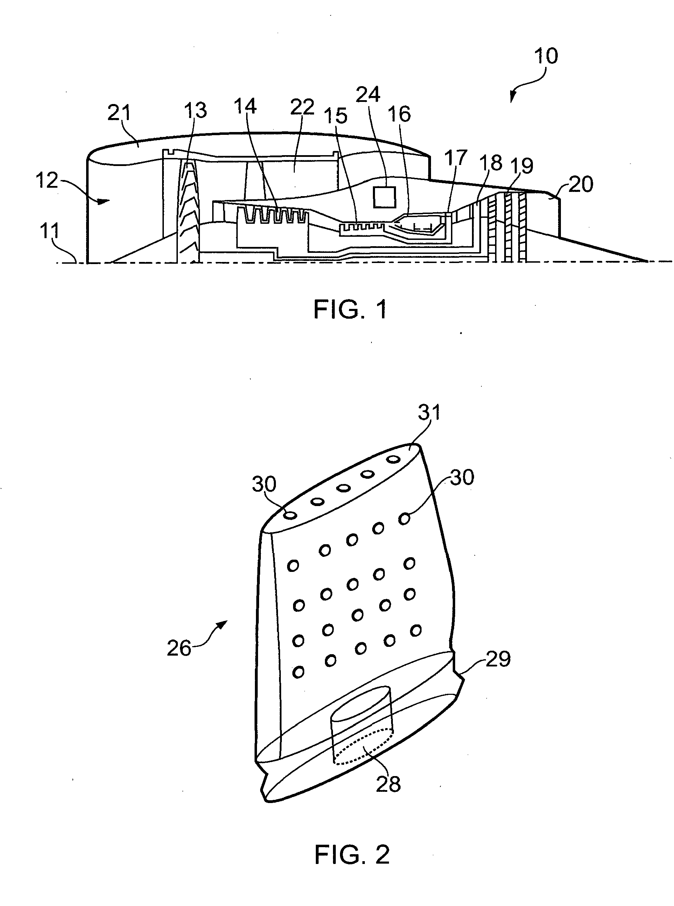

With reference to Figure 1, a ducted fan gas turbine engine generally indicated at 10 has a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, and intermediate pressure turbine 18, a low-pressure turbine 19 and a core engine exhaust nozzle 20. A nacelle 21 generally surrounds the engine 10 and defines the intake 12, a bypass duct 22 and a bypass exhaust nozzle 23.

The gas turbine engine 10 works in a conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high, intermediate and low-pressure turbines 17, 18, 19 respectively drive the high and intermediate pressure compressors 15, 14 and the fan 13 by suitable interconnecting shafts.

Alternative gas turbine engine arrangements may comprise a two, as opposed to three, shaft arrangement, such that they comprise only two compressors and turbines, typically referred to as high and low pressure compressors and turbines. Alternative arrangements may provide for different bypass ratios. Other configurations known to the skilled person include open rotor designs, such as turboprop engines, or else turbojets, in which the bypass duct is removed such that all air flow passes through the core engine. The various available gas turbine engine configurations are typically adapted to suit an intended operation which may include aerospace, marine, power generation amongst other propulsion or industrial pumping applications.

In conventional engines, pressurised air is ducted from the HP compressor 15 to the HP turbine 17 to cool the turbine during engine operation. According to the present invention, at least a portion of the cooling flow from the HP compressor passes through a heat exchanger 24 such that heat energy is extracted from the cooling flow before it reaches the turbine 17.

A schematic of a turbine blade 26 to be cooled is shown in Figure 2. The turbine blade 26 comprises one of a plurality of turbine blades mounted on a common disc such that an array or row of turbine blades is mounted about the periphery of the disc. The cooling air is fed to the blades via internal passages within the disc. Accordingly the cooling air is used to cool both the blades and disc.

The blade 26 has an opening or port 28 at its root 29 which communicates with a corresponding port shown in the disc (not shown) to allow cooling air to be supplied to the blade. The blade typically has a network of internal cooling passages (not shown) which pass through the body of the blade and terminate at openings 30 on the external surface of the blade, through which the cooling flow exits the blade. A first set of cooling holes 30 may be provided at the blade tip and a further set of cooling holes are typically provided in the side or aerofoil surfaces of the blade.

The openings 30 create a film of cooling air over the blade surface and are referred to as film cooling holes. The blade surface is exposed to the hot combustion products during use and thus its aerodynamic efficiency is of crucial significance to the efficiency of the engine. However the cooling air passing through the openings 30 modifies/disrupts the boundary layer flow over the blade and thereby directly affects the lift and drag created by the blade. This in turn affects the useful work done on the blade by the hot gas flow and reduces the aerodynamic efficiency of the turbine. Cooling air scheduling is conventionally based on modulating air temperature or mass-flow with the primary objective of extending blade life. In contrast, the system described below allows control of cooling air in a manner which better accommodates aerodynamic efficiency of the turbine.

Whilst the following description refers to a turbine, comprising a turbine disc and/or blade, the present invention may also be applicable to other hot components which require a source of pressurised cooling air in use, such as turbine seal segments, nozzle guide vanes or similar, and particularly those components for which aerodynamic efficiency is an important factor. Furthermore, whilst the following description relates specifically to the supply of cooled cooling air (involving use of a heat exchanger) it will be appreciated that the control methodology and system may be applied to a more conventional cooling system, in which a heat exchanger may not be used.

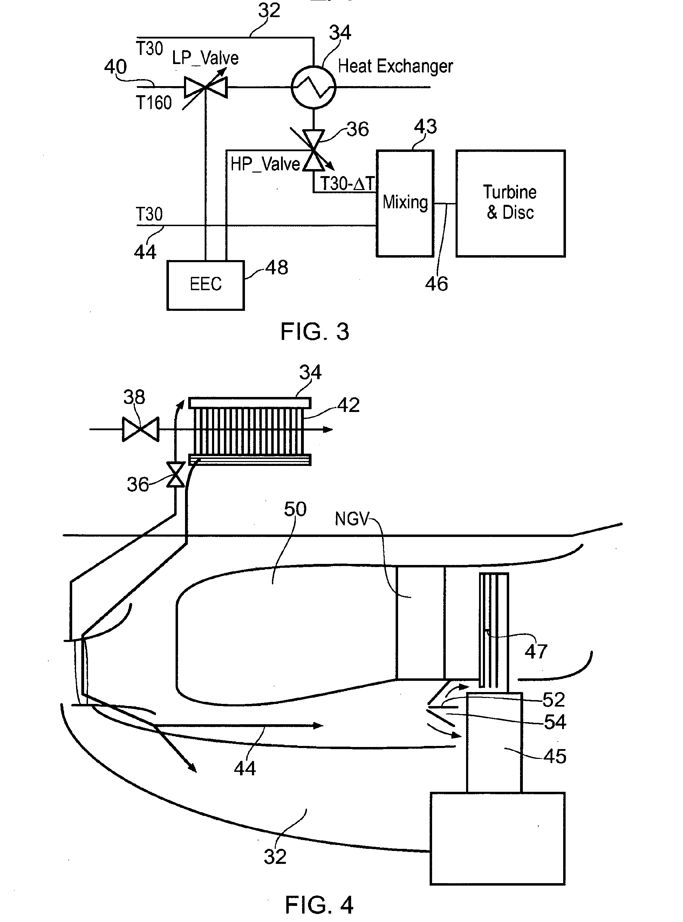

Turning now to Figures 3 and 4, there are shown respective system and section views of cooling systems according to one implementation of the present invention. The system comprises a first duct 32 which communicates a portion of the high pressure (HP) compressed air exiting the compressor at a temperature T30 to an inlet on one side of a heat exchanger 34 which is located in a side channel of the fan or bypass duct. The flow rate of the diverted compressed air is controlled by valve 36, which may be referred to herein as a high pressure valve. Lower pressure (LP) cooling air at temperature T160 travelling through the fan duct is diverted, under the control of valve 38, into the side channel or duct 40 and through a further inlet of the heat exchanger. The air in duct 40 is thus directed over heat exchange elements 42, through which the compressed (HP) air flows, to thereby cool the compressed air by an amount AT. The HP and LP air steams are thus isolated from one another by the body of the heat exchanger but allow heat energy to pass there-between via the conducting walls of heat exchange elements 42.

The cooling air exiting the heat exchanger 34 is thus cooled (hereafter referred to as "cooled cooling air") prior to passing to the turbine. In this embodiment, the cooled cooling air exiting the heat exchanger is mixed, for example at a mixer nozzle 43, with a further portion of the compressed air exiting of the compressor section (at a temperature T30) along duct. The combined flow from ducts 44 and 32 then pass to the high pressure turbine disc 45 and blades 47 via duct 46.

It can be seen that the HP valve 36 in Figure 3 is located downstream of the heat exchanger 34 and that the corresponding valve in Figure 4 is located upstream thereof, in this example mounted in the intercase wall. However it will be appreciated that both configurations allow control of flow rate through the heat exchanger in the manner described above.

Also visible in Figure 4 is the manner in which the duct 32 bypasses the combustion chamber 50. In this example, the duct or passage 32 is spaced from the combustor by the duct 44. Thus the duct 32 passes inboard of the combustor or between the combustor and the engine axis. The passage 44 provides an air cavity about the combustor such that air within the duct 44 passes over the walls of the combustion chamber. The mixing arrangement 42 in Figure 4 comprises two pre-swirl nozzles 52 and 54 which impart swirl to the cooled cooling air and the hotter compressed air streams to induce effective mixing.

The flow rate and the temperature of the cooled cooling air are thus determined by the valves 36, 38, with the settings of the valves 36, 38 being under the control of a controller 48, which in this example comprises the engine electronic controller (EEC). The valve 36 can be actuated to control the ratio of cooled cooling air relative to the supply of compressed air along duct 44, thereby controlling the temperature and flow rate of the mixed flow delivered along duct 46 to the turbine.

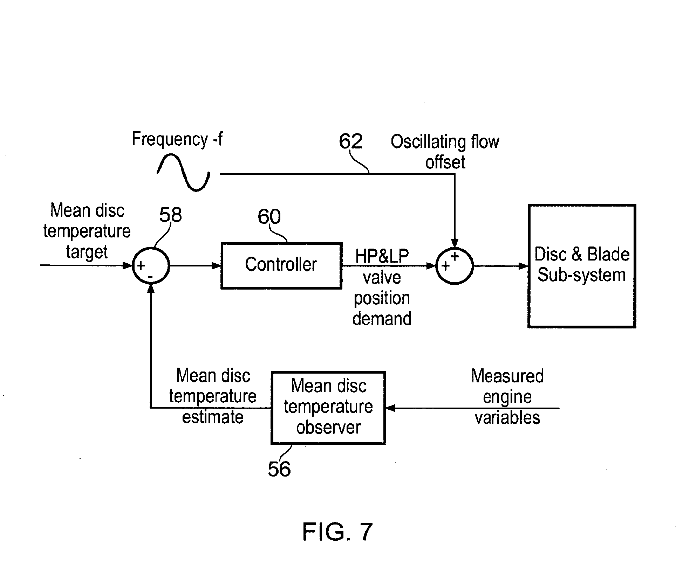

In examples of the present invention, the EEC applies a control signal which actuates the valve 36 in an oscillating manner as will be described below with reference to Figure 7.

The desired operation of the valve 36 can be achieved using various different types of valve, including (but not limited to) a ball valve or flapper valve. Other valve configurations or types commonly used in industry may also be considered and will typically be required to be specifically optimised for this application. Also it is to be noted that in other embodiments, the LP valve 38 may not be required. As such, a substantially constant supply of LP air may flow to the heat exchanger.

In Figure 7, there is shown a schematic of control loop that may be used to implement the control scheme of the invention. In this example a closed-loop control scheme is used with the aim of achieving a desired mean disc temperature. To this end the system comprises a temperature sensor 56 in the form of a mean disc temperature sensor. This can take the form of a pyrometer measuring a point temperature on the disc, and may additionally comprise a processing unit which applies a predetermined functional correlation to convert the point temperature to a mean temperature.

In alternative embodiments, a blade temperature sensor or other type of suitable operating variable sensor may be used. For example in one embodiment, the control scheme may aim to achieve a desired value of stress instead of relying directly on temperatures. Additionally or alternatively, sensors, typically thermocouples, can be used to measure the temperature of one or more flows in the system, such as any, or any combination, of ducts 32, 40, 44 and/or 46.

The measured or determined operating variable is compared in a comparator 58 with a corresponding desired variable target value, which is typically calculated offline as a function of, for example, engine power, altitude, ambient temperature and Mach number. The resulting error value is sent to a control unit 60, which determines therefrom appropriate demand signals to be sent to the valves controlling the flow rates of the HP compressed air and/or LP cooling air sent to the heat exchanger according to engine conditions to control disc temperatures.

The demand signals can be calculated in the control unit 60 for example by defining a transfer function that acts on the error. However, the control unit implements closed-loop multivariable control. Thus the demand signals issued by the control unit at previous time steps are also used by the unit to determine the current demand signals. The control unit can implement a simple PI controller or a more sophisticated transfer function of a type known to the skilled person.

In accordance with the present invention the control output of the controller 60 is augmented by an oscillatory signal component 62 such that the valve is actuated to oscillate between maximum and minimum flow conditions which lie on either side of the valve position determined by the controller 60. This is achieved by determining a desired amplitude and frequency of oscillation and supplementing the valve control signal accordingly. The oscillation may be applied such that the mean valve position is substantially equal to the desired valve position determined by the control unit 60. In alternative embodiments or modes of operation, the oscillation may be determined in conjunction with the control unit output for example to increase or decrease the mean flow rate through the valve.

The frequency of oscillation is selected to be higher, and typically significantly higher, than the thermal time constant of the component to be cooled. For example the frequency of oscillation will be at least one, and more typically at least two, orders of magnitude greater than time constant for the component to be cooled.

The frequency of the flow modulation applied at 62 is selected as a function of one or more operating parameters with the aim of modifying the flow through the cooling ports 30 in the turbine blade and thereby affecting the boundary layer flow in a manner which reduces drag on the blade.

In this example, the oscillation signal component (for example the frequency and/or magnitude component thereof) is determined as a function of the high pressure turbine speed (conventionally referred to as N₃) and/or the altitude (ALT). However it is possible that other parameters could be used, such as such is T26, P30, N1, N2, N3 or non-dimensional speeds, or other engine parameters as will be apparent to the skilled person. Additionally or alternatively, different parameters may be used to determine different components of the oscillation signal, either independently or in conjunction with other parameters. Thus one parameter or combination of parameters may be used to determine the frequency component, whereas another parameter, or combination of parameters, may be used to determine the amplitude component.

It is proposed that a frequency of greater than the 1 Hz will be used. In contrast, the turbine disc thermal time constant may be in the region of several hundred seconds and so the disc will experience the mean disc temperature as controlled by the primary control loop as described above, rather than the individual fluctuations in the valve caused by the oscillatory signal component. However the film cooling flow over the blades will experience a change in aerodynamic performance based on such changes, ideally without adversely affecting the overall mean flow consumption.

In one example, it is envisaged that a valve actuation frequency could be applied at 62 which is approximately equal to, or of an order of magnitude that is substantially equal to, the blade passing frequency. A frequency of greater than 100 Hz may be used and typically a frequency in the order of kHz, such as a few kHz. Alternatively a frequency could be applied which is a harmonic of the blade passing frequency.

In the present example it is intended that the valve will be actuated by a magnitude of oscillation such that it remains open even at the minimum flow condition. In this regard the amplitude of oscillation will preferably be less than 100% of the magnitude of the mean flow open condition set by the control unit 60. For example the oscillatory signal component will actuate the valve with amplitude less than 50% of the nominal valve position. In this example, an oscillation of between 10 and 20% of the nominal value is intended.

However in further examples of the invention a greater amplitude of oscillation may be used, for example if a base required cooling flow is provided which short circuits the valve, such as via conduit 44. Thus the valve actuation could be used merely to supplement the nominal flow as necessary.

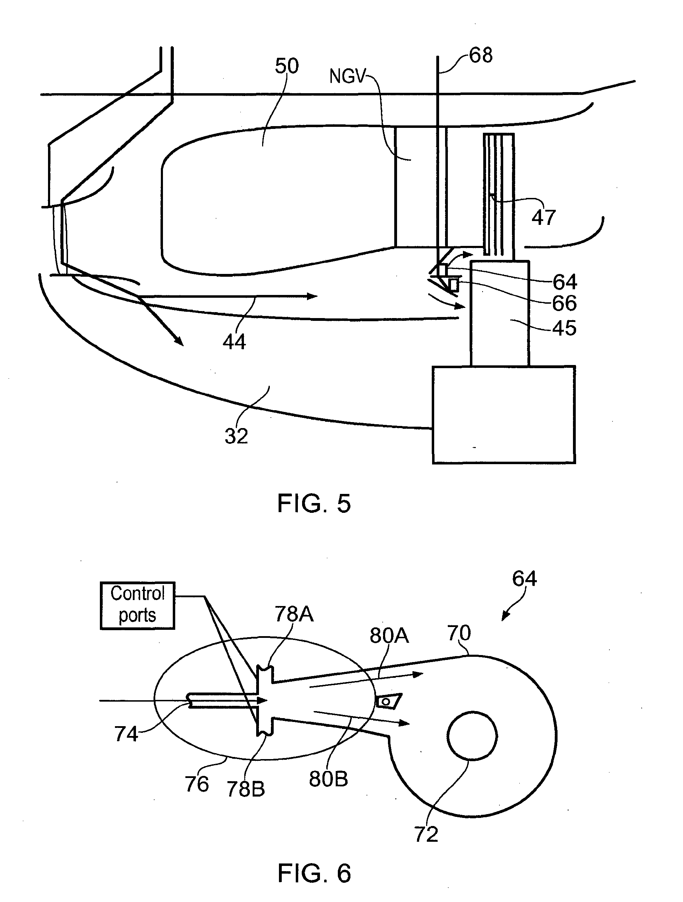

Turning now to Figures 5 and 6, there is shown additional or alternative features according to the present invention. For conciseness, the heat exchanger and associated components of Figure 3 have been omitted from Figure 5. Any of the features described above in relation to Figures 3 or 4 may apply to Figure 6. However in Figure 6 there is shown a further arrangement for controlling the flow between the heat exchanger and turbine, which may be used instead of the HP valve 36 in Figures 3 and 4.

In Figure 6, there is shown a valve 64, 66 associated with each of the pre-swirl nozzles 52, 54. In this embodiment, those valves 64, 66 comprise switchable vortex valves of the type shown in Figure 6. Each of those valves is actuated under the control of a control lines or pipes 68. Control signals for actuation of the valves 64, 66 may be issued by the same controller as described above and may result in actuation of the valves via the control pipes 68, typically by variation in the pressure/flow in the control pipes.

As shown in Figure 6, the switched vortex valve (SVV) 64 or 66 comprises a vortex chamber 70 with an outlet 72 which leads to the turbine. The cooled cooling air flows into the SVV at inlet 74. Located between the inlet and the vortex chamber, there is provided a fluid diverter region 76 comprising a duct having control ports 78A and 78B on opposing sides thereof. The valve is switched by selective actuation of ports 78A and/or 78B, with the main flow through the device provided via inlet port 74. Actuators are associated with each control port 78A and 78B, such as solenoid actuators, which may be located, for example, on the fancase or otherwise at a location nearer to the SVV. Those actuators are controlled by the controller.

The air flow through the SVV can be controlled depending on which control port is open and drawing air there-through. Accordingly the SVV can be set in low or high resistant state passing through more or less flow supplied through port 74 to the outlet 72. The two flow regimes of the valve are indicated by arrows 80A and 80B. Oscillation the two valve actuators at a required frequency causes a corresponding oscillation of the opening and closing of ports 78A and 78B, which in turn achieves the pulsation of flow between the inlet and the outlet of the SVV. Thus the SVV can be used in conjunction with a pre-swirl nozzle in order to achieve the desired flow oscillation according to the present invention. The switching frequency can be any desired and may include switching schemes such as pulse width modulation to provide a required output flow. By pulse width modulation, it is meant that the duty cycle of the opening and closing ports are modulated to provide a required, potentially continuously varying, output flow from the SVV.

Whilst a specific example of SVV is described above, it will be appreciated that a vortex amplifier or other suitable fluidic control device, typically one having non-moving parts within the main fluid flow, could be used.

This type of arrangement is beneficial since the flow modulation predominantly affects (e.g. to a first order) the blade feed mass-flow and rim temperature without affecting the rest of the CCA airflow to the disc. Also, because mass flow is controlled directly at the pre-swirl nozzle exit, the lag associated with the heat exchanger is not present and so the operating frequency of the system can be made several orders of magnitude higher than in the original embodiment. This has a consequence of opening up a larger variation in modulation frequency that can be attempted in order to optimise the aerodynamic effects..

The fact that the blade feed mass flow is controlled independently from the CCA flow means that there is scope for the optimisation of the two flows independently. In any of the above described embodiments, the two air flows 32 and 44 can be mixed in different proportions in two air streams by respective pre-swirler nozzles 54 and 52 before being used to cool the high pressure turbine disc and blades. For each pre-swirler nozzle, the measured temperatures and can be functionally correlated with, for example, the high pressure turbine speed and the altitude to provide the desired temperatures of the respective resultant coolant flows experienced by the turbine.

Whilst the controller 60, 48 described above determines the desired control signals based on a closed loop methodology, it will be appreciated to the skilled person that a more-conventional open loop control system could be implemented in accordance with the present invention, wherein the control signal output of an open loop controller could be supplemented by the oscillating signal component 62 described above. In such an open-loop system the controller settings can be derived using engine performance decks and the valve scheduling maps are typically derived based on the performance of a mean new engine model using a nominal flight cycle.

In accordance with the above described examples, the present invention provides a cooled cooling air control architecture which can be used to modulate the flow of cooling air to the relevant turbine components and thereby affect the components boundary layer flow profile. This can be used to improve aerodynamic efficiency and thereby improve thermodynamic turbine efficiency, which can positively impact on the effective work done by the turbine. Thus it will be appreciated that the invention may be applicable to the cooling of any components which have internal cooling channels which open on a fluid-washed surface of the component that is typically exposed to a working fluid in use.

In accordance with aspects of the invention, there is provided a control methodology by which a certain percentage of blade cooling air is modulated at a suitably parameterised frequency (in terms of engine parameters) such that the aerodynamic performance of the blade is improved or optimised, for example to optimise aerodynamic efficiency. The cooling air may be modulated to generate predetermined fluctuations in flow rate to the blades.

## Claims

1. A cooling system for a gas turbine engine (10) having a compressor (14), a combustor (16) and a turbine section arranged to receive combustion products from the combustor, the cooling system comprising:
ducting (32,44) defining a flow path from the compressor to a component to be cooled within the turbine section, wherein said ducting bypasses the combustor and includes at least one heat exchanger (34) for cooling the air received from the compressor in use and wherein the component includes openings (30) through which the cooling air exits the component to create a film of cooling air;
one or more valves (36, 64, 66) in said flow path; and
a controller (48, 60) arranged to control actuation of the valve at a predetermined frequency so as to modify the flow in the flow path to the component and the film of cooling air in an oscillating manner wherein the component has a fluid washed surface and the predetermined frequency of actuation of the valve is set by the controller according to one or more gas turbine engine operating parameters in order to improve the aerodynamic efficiency of the component in use.

2. A cooling system as claimed in claim 1, wherein the controller is arranged to actuate the valve in an oscillatory manner between first and second conditions.

3. A cooling system as claimed in claim 1, wherein the controller is arranged to actuate the valve using a pulse width modulation scheme.

4. A cooling system as claimed in claim 3, wherein the first and second conditions comprise first and second open conditions, the first condition permitting a greater flow rate through the valve than the second condition.

5. A cooling system as claimed in claim any preceding claim, wherein the controller controls actuation of the valve so as to generate between a 5% and 30% variation in the flow rate.

6. A cooling system as claimed in any preceding claim, wherein the controller controls actuation of the valve so as to generate a predetermined variation in flow rate about a desired flow rate in a oscillatory manner such that the desired flow rate is substantially maintained over time.

7. A cooling system as claimed in claim 1, comprising first and second flow paths between the compressor and the component to be cooled, the first flow path passing through the heat exchanger and the second flow path bypassing the heat exchanger.

8. A cooling system as claimed in claim 7, comprising flow mixing apparatus arranged to receive at least a portion of the flow from the first flow path and at least a portion of the flow from the second flow path and to communicate a mixture of said first and second flow portions to the component.

9. A cooling system as claimed in either of claims 7 or 8, wherein either or both of the first and second flow paths comprise a valve which is arranged to be actuated by the controller at the predetermined actuation frequency.

10. A cooling system as claimed in any preceding claim, wherein the valve comprises a switchable vortex valve (64).

11. A cooling system as claimed in any preceding claim, wherein the component comprises a turbine blade (26) and/or disk (45).

12. A cooling system as claimed in any preceding claim, wherein the ducting downstream of the heat exchanger comprises a bifurcation, wherein a further flow is mixed with one arm of the bifurcated flow.

13. A cooling system as claimed in any preceding claim, wherein the controller outputs a substantially sinusoidal control signal for actuation of the valve.

14. A cooling system as claimed in any preceding claim, wherein the controller is arranged to receive sensor data from one or more sensors (56) on the engine and to update the predetermined frequency based on the received sensor data.

15. A method of cooling in a gas turbine engine having a compressor, a combustor and a turbine section arranged to receive combustion products from the combustor, the method comprising:
ducting compressed gas from the compressor to a component to be cooled within the turbine section, wherein the component includes openings (30) through which the cooling air passes to create a film of cooling air and wherein said ducting bypasses the combustor and includes at least one heat exchanger (34) for cooling the air received from the compressor;
delivering at least a portion of the compressed gas to the component through a valve and controlling actuation of the valve at a predetermined frequency so as to modify the supply of cooling flow to said component to create a film of cooling air in an oscillating manner.

## Patentansprüche

1. Ein Kühlsystem für einen Gasturbinenmotor (10), der einen Verdichter (14), eine Brennkammer (16) und einen Turbinenabschnitt aufweist, der angeordnet ist, um Verbrennungsprodukte von der Brennkammer aufzunehmen, wobei das Kühlsystem Folgendes umfasst:
ein Leitungssystem (32, 44), das einen Strömungsweg von dem Verdichter zu einer innerhalb des Turbinenabschnitts zu kühlenden Komponente definiert, worin das Leitungssystem die Brennkammer umgeht und mindestens einen Wärmeaustauscher (34) beinhaltet, um die vom Verdichter im Einsatz erhaltene Luft zu kühlen, und worin die Komponente Öffnungen (30) beinhaltet, durch die die Kühlluft aus der Komponente austritt, um einen Kühlluftfilm zu erzeugen;
ein oder mehrere Ventile (36, 64, 66) in dem Strömungsweg; und
eine Steuereinheit (48, 60), die angeordnet ist, um die Betätigung des Ventils in einer vorgegebenen Frequenz zu steuern, sodass der Durchfluss im Strömungsweg zur Komponente und dem Kühlluftfilm oszillierend modifiziert wird, wobei die Komponente eine mit Fluid gewaschene Oberfläche aufweist und die vorgegebene Betätigungsfrequenz des Ventils von der Steuereinheit entsprechend einem oder mehreren Gasturbinenmotor-Betriebsparametern eingestellt wird, um die aerodynamische Effizienz der Komponente im Einsatz zu verbessern.

2. Ein Kühlsystem, wie in Anspruch 1 beansprucht, worin die Steuereinheit angeordnet ist, um das Ventil oszillierend zwischen ersten und zweiten Bedingungen zu betätigen.

3. Ein Kühlsystem, wie in Anspruch 1 beansprucht, worin die Steuereinheit angeordnet ist, um das Ventil unter Verwendung eines Pulsbreitenmodulationsschemas zu betätigen.

4. Ein Kühlsystem, wie in Anspruch 3 beansprucht, worin die ersten und zweiten Bedingungen eine erste und zweite offene Bedingung umfassen, wobei die erste Bedingung eine größere Durchflussrate durch das Ventil als die zweite Bedingung erlaubt.

5. Ein Kühlsystem, wie in einem vorhergehenden Anspruch beansprucht, worin die Steuereinheit die Betätigung des Ventils steuert, damit Schwankungen der Durchflussrate von 5% bis 30% erzeugt werden.

6. Ein Kühlsystem, wie in einem vorhergehenden Anspruch beansprucht, worin die Steuereinheit die Betätigung des Ventils so steuert, dass vorgegebene Schwankungen der Durchflussrate um eine gewünschte Durchflussrate oszillierend erzeugt werden, so dass die gewünschte Durchflussrate im Wesentlichen im Laufe der Zeit erhalten bleibt.

7. Ein Kühlsystem, wie in Anspruch 1 beansprucht, umfassend erste und zweite Strömungswege zwischen dem Verdichter und der zu kühlenden Komponente, wobei der erste Strömungsweg durch den Wärmeaustauscher geht und der zweite Strömungsweg den Wärmeaustauscher umgeht.

8. Ein Kühlsystem, wie in Anspruch 7 beansprucht, umfassend einen Durchflussmischer, der angeordnet ist, um mindestens einen Anteil des Durchflusses vom ersten Strömungsweg und mindestens einen Anteil des Durchflusses vom zweiten Strömungsweg aufzunehmen und um eine Mischung des ersten und zweiten Anteils an die Komponente zu übermitteln.

9. Ein Kühlsystem, wie in einem der Ansprüche 7 oder 8 beansprucht, worin einer oder beide des ersten und zweiten Strömungsweges ein Ventil umfassen, das angeordnet ist, um durch eine Steuereinheit in der vorgegebenen Betätigungsfrequenz betätigt zu werden.

10. Ein Kühlsystem, wie in einem vorhergehenden Anspruch beansprucht, worin das Ventil ein umschaltbares Wirbelventil (64) umfasst.

11. Ein Kühlsystem, wie in einem vorhergehenden Anspruch beansprucht, worin die Komponente eine Turbinenschaufel (26) und/oder -scheibe (45) umfasst.

12. Ein Kühlsystem, wie in einem vorhergehenden Anspruch beansprucht, worin das Leitungssystem dem Wärmeaustauscher nachgelagert eine Gabelung umfasst, wobei ein weiterer Durchfluss mit einem Arm des gegabelten Durchflusses gemischt wird.

13. Ein Kühlsystem, wie in einem vorhergehenden Anspruch beansprucht, worin die Steuereinheit ein im Wesentlichen sinusförmiges Steuersignal zur Betätigung des Ventils ausgibt.

14. Ein Kühlsystem, wie in einem vorhergehenden Anspruch beansprucht, worin die Steuereinheit angeordnet ist, um Sensordaten von einem oder mehreren Sensoren (56) am Motor zu empfangen und die vorgegebene Frequenz auf der Basis der empfangenen Sensordaten zu aktualisieren.

15. Ein Verfahren zum Kühlen in einem Gasturbinenmotors, der einen Verdichter, eine Brennkammer und einen Turbinenabschnitt aufweist, der angeordnet ist, um Verbrennungsprodukte von der Brennkammer zu erhalten, wobei das Verfahren Folgendes umfasst:
Leiten von Druckgas vom Verdichter zu einer zu kühlenden Komponente innerhalb des Turbinenabschnitts, worin die Komponente Öffnungen (30) beinhaltet, durch die die Kühlluft strömt, um einen Kühlluftfilm zu erzeugen, und worin das Leitungssystem die Brennkammer umgeht und mindestens einen Wärmeaustauscher (34) zum Kühlen der vom Verdichter empfangenen Luft beinhaltet;
Abgeben von mindestens einem Anteil des Druckgases an die Komponente durch ein Ventil und Steuern der Betätigung des Ventils in einer vorgegebenen Frequenz, um die Zufuhr von Kühlluft an die Komponente zu modifizieren, damit ein Kühlluftfilm oszillierend erzeugt wird.

## Revendications

1. Système de refroidissement pour moteur de turbine à gaz (10), comportant un compresseur (14), une chambre de combustion (16) et une section de turbine conçus pour recevoir des produits de combustion de la chambre de combustion, ce système de refroidissement comprenant :
des canalisations (32,44) définissant un passage de flux du compresseur vers un composant à refroidir dans la section de turbine, procédé dans lequel lesdites canalisations évitent la chambre de combustion et comprennent au moins un échangeur de chaleur (34) pour refroidir l'air reçu du compresseur en cours d'usage et dans lequel le composant comprend des orifices (30) par lesquels l'air de refroidissement sort pour créer un film d'air de refroidissement ;
une ou plusieurs vannes (36, 64, 66) dans ledit parcours d'écoulement (48, 60) ; et
une commande (48, 60) conçue pour commander l'actionnement de la vanne à une fréquence prédéterminée de manière à modifier l'écoulement dans le parcours d'écoulement vers le composant et le film d'air de refroidissement tout en oscillant, dans laquelle le component a une surface lavée au fluide et la fréquence prédéterminée d'actionnement de la vanne est fixée par l'organe de commande en fonction d'un ou plusieurs paramètres opératoires du moteur de turbine à gaz afin d'améliorer l'efficacité aérodynamique du composant en cours d'usage.

2. Système de refroidissement selon la revendication 1, dans lequel l'organe de commande est conçu pour actionner la vanne de manière à ce qu'elle oscille entre une première et une seconde positions.

3. Système de refroidissement selon la revendication 1, dans lequel l'organe de commande est conçu pour actionner la vanne en utilisant un schéma de modulation d'amplitude d'impulsion.

4. Système de refroidissement selon la revendication 3, dans lequel les première et une seconde positions comprennent des première et une seconde positions ouvertes, la première position permettant une vitesse d'écoulement supérieure à travers la vanne que la seconde position.

5. Système de refroidissement selon l'une quelconque des revendications précédentes, dans lequel l'organe de commande commande l'actionnement de la vanne de manière à générer une variation de 5 % à 30 % de la vitesse d'écoulement.

6. Système de refroidissement selon l'une quelconque des revendications précédentes, dans lequel l'organe de commande commande l'actionnement de la vanne de manière à générer une variation prédéterminée de la vitesse d'écoulement tout en oscillant de manière à ce que la vitesse d'écoulement désirée soit substantiellement maintenue dans le temps.

7. Système de refroidissement selon la revendication 1, comprenant un premier et un second parcours d'écoulement entre le compresseur et le composant à refroidir, le premier parcours d'écoulement traversant l'échangeur de chaleur et le second parcours d'écoulement évitant l'échangeur de chaleur.

8. Système de refroidissement selon la revendication 7, comprenant un appareil de mélange d'écoulement conçu pour recevoir au moins une partie de l'écoulement du premier parcours d'écoulement et au moins une partie de l'écoulement du second parcours d'écoulement et pour transférer un mélange desdites première et seconde parties d'écoulement au composant.

9. Système de refroidissement selon l'une quelconque des revendications 7 ou 8, dans lequel l'un quelconque ou les deux parcours d'écoulement comprend une vanne qui est conçue pour être actionnée par l'organe de commande à la fréquence d'actionnement prédéterminée.

10. Système de refroidissement selon l'une quelconque des revendications précédentes, dans lequel la vanne comprend une vanne à vortex commutable (64).

11. Système de refroidissement selon l'une quelconque des revendications précédentes, dans lequel le composant comprend une lame et/ou de turbine (26) et/ou un disque (45).

12. Système de refroidissement selon l'une quelconque des revendications précédentes, dans lequel la conduite située en aval de l'échange de chaleur comprend une bifurcation et dans lequel un autre écoulement est mélangé avec un bras de l'écoulement ayant bifurqué.

13. Système de refroidissement selon l'une quelconque des revendications précédentes, dans lequel l' organe de commande émet un signal de commande sensiblement sinusoïdal pour actionner la vanne.

14. Système de refroidissement selon l'une quelconque des revendications précédentes, dans lequel la commande est conçue pour recevoir des données de détection de la part d'un ou plusieurs capteurs (56) du moteur et pour actualiser la fréquence prédéterminée en se basant sur les données de détection reçues.

15. Procédé de refroidissement dans un moteur de turbine à gaz comportant un compresseur, une chambre de combustion et une section de turbine conçus pour recevoir des produits de combustion de la chambre de combustion, ce procédé comprenant :
la canalisation de gaz comprimé depuis le compresseur vers un composant à refroidir dans la section de turbine, dans lequel procédé le composant comprend des orifices (30) par lesquels l'air de refroidissement sort pour créer un film d'air de refroidissement et ladite canalisation évite la chambre de combustion et comprend au moins un échangeur de chaleur (34) pour refroidir l'air reçu du compresseur ;
la délivrance d'au moins une partie du gaz comprimé au composant à l'aide d'une vanne et la commande de l'actionnement de la vanne à une fréquence prédéterminée de manière à modifier la délivrance de flux de refroidissement audit composant pour créer un film d'air de refroidissement tout en oscillant.
